(19) Europäisches Patentamt
European Patent Office
Office européen des brevets

(11) Publication number: **0 024 841 A1**

(12) # EUROPEAN PATENT APPLICATION

(21) Application number: 80302721.8

(22) Date of filing: 08.08.80

(51) Int. Cl.3: **A 01 N 47/12**
A 01 N 47/30
//(A01N47/12, 47/30, 43/70, 33/22), (A01N47/30, 47/12)

(30) Priority: 01.09.79 GB 7930391
03.06.80 GB 8018075

(43) Date of publication of application: 11.03.81 Bulletin 81/10

(84) Designated Contracting States: AT BE DE FR GB IT NL

(71) Applicant: FISONS LIMITED
Fison House 9 Grosvenor Street
London WIX OAH(GB)

(72) Inventor: van Hoogstraten, Samuel David
36 Butchers Hill Ickleton
Cambridge CB101 SR(GB)

(74) Representative: Murphy, Finnbarr et al,
Fisons Limited Fison House Princes Street
Ipswich 1P1 1QH(GB)

(54) **Plant physiologically active composition and use.**

(57) Weeds are combated, especially in wheat or barley, or plant growth is regulated, by a combination of
(a) thiobencarb; and
(b) one or more of triallate, prometryne, terbutryne, trietazine, metoxuron, neburon, nitrofen and chlomethoxynil.

**EP 0 024 841 A1**

BA 79/30391

PLANT PHYSIOLOGICALLY ACTIVE COMPOSITION AND USE

This invention relates to a method and composition for affecting plant physiology.

The invention provides a method of combating weeds or regulating the growth of a plant at a locus, which method comprises applying to the locus a weed-combating or plant growth regulant amount of

(a) thiobencarb; and

(b) one or more, usually one, of trietazine, prometryne, terbutryne, triallate, metoxuron, neburon, nitrofen and chlomethoxynil.

In addition, the invention provides a plant physiologically active composition comprising (a) and (b).

Each of the present compounds is known separately as a herbicide, but it has been found that (a) and (b) seem to render plants more susceptible to the action of the other, so that the present method and composition are unexpectedly advantageous, especially when used in the control of weeds in ryegrass (Lolium spp) or cereal crops. Components (a) and (b) are synergistic, being surprisingly effective, e.g. against weeds such as mayweed (Matricaria inodora), and surprisingly safe to crops, e.g. wheat (Triticum vulgare) or barley (Hordeum vulgare). In addition, the method and composition can be used to combat a wider range of weed species than when either (a) or (b)

is used alone.

Thiobencarb is S-4-chlorobenzyl diethylthiocarbamate. Triallate is S-2,3,3-trichloroallyl di-isopropylthiocarbamate. Prometryne is 2,4-di(isopropylamino)-6-methylthio-1,3,5-triazine. Terbutryne is 2-tert-butylamino-4-ethylamino-6-methylthio-1,3,5-triazine. Trietazine is 2-chloro-4-diethylamino-6-ethylamino-1,3,5-triazine. Metoxuron is 3-(3-chloro-4-methoxyphenyl)-1,1-dimethylurea. Neburon is 1-butyl-3-(3,4-dichlorophenyl)-1-methylurea. Nitrofen is 2,4-dichlorophenyl 4-nitrophenyl ether. Chlomethoxynil is 2,4-dichlorophenyl 3-methoxy-4-nitrophenyl ether.

In a particularly preferred embodiment (b) is trietazine.

Usually the proportions respectively of (a) to (b) are from 200:1 to 1:100, e.g. 25:1 to 1:6. Parts, proportions and percentages in this specification are by weight unless otherwise indicated. Generally there is a greater weight of (a) than of (b). In preferred embodiments, the proportions respectively of (a) to triallate are from 16:1 to 1:3; to prometryne are from 8:1 to 1:3; to terbutryne are from 8:1 to 1:3; to trietazine are from 25:1 to 1:2; to metoxuron are from 16:1 to 1:4; to neburon are from 40:1 to 1:3; to nitrofen are from 8:1 to 1:5; or to chlomethoxynil are from 16:1 to 1:1.

The essential components (a) and (b) can be applied together in a composition comprising (a) and (b). The compositions can be prepared by admixing the ingredients. Usually the compositions are initially produced in the form of concentrates, e.g. containing 0.5-95% *in toto* of the essential components, and these are diluted with water or a hydrocarbon, usually water, for application, generally such that the concentration *in toto* of the essential components is 0.05-4%, though it may be up to 50% or more when sprayed from aircraft. Thus, the present compositions usually contain 0.05-95% *in toto* of the essential components.

The compositions normally contain a surface active agent and/or a carrier.

The carrier may be a liquid, e.g. water (e.g. water used to dilute a concentrate for application). A concentrate containing water as carrier may advantageously also contain a surface active agent. In one embodiment, (a) and (b) are ground with water, a wetting agent and a suspending agent, usually in an agitated ball mill containing grinding media, e.g. steatite balls, to a particle size for both (a) and (b) of preferably less than 5 microns, to form a flowable suspension concentrate.

The carrier may be a liquid other than water, for example an organic solvent, usually a water-immiscible

solvent, e.g. a hydrocarbon which boils within the range 130-270°C, in which the essential components are dissolved or suspended. Thus, the invention provides a liquid composition comprising the compounds and a liquid hydrocarbon which boils within the range 130-270°C. A concentrate containing an organic solvent suitably also contains a surface active agent so that the concentrate acts as a self-emulsifiable oil on admixture with water. In a particular method, an emulsifiable concentrate is produced by stirring together, preferably with warming to aid dissolution, components (a) and (b), one or more emulsifiers and a water-immiscible solvent desirably comprising xylene or isophorone to form a solution, and usually filtering or centrifuging to remove insoluble impurities.

The carrier may be a solid, which may be finely divided. Thus, the invention provides a solid composition comprising the compound and a solid carrier. Examples of suitable solids are clays, sand, mica, chalk, attapulgite, diatomite, perlite, sepiolite, synthetic solid carriers, e.g. silicas, silicates and lignosulphonates, and solid fertilizers.

Wettable powders rapidly dispersible in water may be formed by admixing (a) and (b) in particulate form with a carrier or spraying molten (a) and (b) on to the carrier,

admixing a wetting agent and a dispersing agent therewith, and fluid energy milling or pulverising the whole powder mixture to a particle size sufficiently small that the wettable powder in use can form the desired suspension.

The term 'surface active agent' is used in the broad sense to include materials variously called emulsifying agents, dispersing agents and wetting agents. Such agents are well known in the art.

The surface active agents used may comprise anionic surface active agents, for example mono- or di-esters of phosphoric acid with fatty alcohol ethoxylates or with alkylphenol ethoxylates, salts of such esters, fatty alcohol sulphates such as sodium dodecyl sulphate, sodium octadecyl sulphate or sodium cetyl sulphate, ethoxylated fatty alcohol sulphates, ethoxylated alkylphenol sulphates, lignin sulphonates, petroleum sulphonates, alkylaryl sulphonates such as alkyl-benzene sulphonates or lower alkylnaphthalene sulphonates, e.g. butyl-naphthalene sulphonate, salts of sulphonated naphthalene-formaldehyde condensates, salts of sulphonated phenol-formaldehyde condensates, or more complex sulphonates such as the amide sulphonates, e.g. the sulphonated condensation product of oleic acid and N-methyl taurine or the dialkyl sulphosuccinates, e.g. the sodium sulphonate of dioctyl succinate.

The surface active agents may also comprise non-ionic agents, for example condensation products of fatty acid esters, fatty alcohols, fatty acid amides or fatty-, alkyl- or alkenyl-substituted phenols with ethylene oxide, fatty esters of polyhydric alcohol ethers, e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide or ethoxylated tertiary fatty amines.

Preferred surface active agents include ethoxylated fatty alcohol sulphates, lignin sulphonates, alkyl-aryl sulphonates, salts of sulphonated naphthalene-formaldehyde condensates, salts of sulphonated phenol-formaldehyde condensates, dialkyl sulphosuccinates, alkyl phenol ethoxylates, and fatty alkyl ethoxylates.

Non-ionic surface active agents are preferred.

(a) and (b) may be admixed with a non-phytotoxic oil, e.g. Actipron, Agri-Oil Plus, Sun Oil 11E or Fyzol 11E.

(a) and (b) may be employed in association with a herbicidal antidote (a substance having the property of

improving the safety to crops of the compounds), e.g. N,N-diallyl-2,2-dichloroacetamide, 1,8-naphthalic anhydride, 4'-chloro-2-(hydroxyimino)acetanilide, α-(cyanomethoximino)-benzeneacetonitrile or 2,2-dimethyl-3-dichloroacetyloxazolidine. Although the antidote may be applied in admixture with active compound, it is preferably applied separately, and especially as a treatment for crop seeds. The ratio by weight of herbicide to antidote is preferably from 1:4 to 4:1.

(a) and (b) may be in admixture with fertilizers.

(a) and (b) may be mixed immediately before use Desirably, however, they would already have been mixed.

The composition is particularly useful for combating weeds in a crop. The composition can be applied after, or preferably, before, emergence of the crop. The composition can be applied before sowing the crop, with or without incorporation of the composition in the soil.

Instead of applying (a) and (b) together in a composition such as is discussed above, they can be applied separately in analogous compositions containing just (a) or (b), (e.g. (b) such as triallate applied by pre plant incorporation and (a) applied pre-emergence), particularly as a chemical weed control programme, or part of a chemical weed control programme, in a crop season.

The invention provides a one pack presentation, in

which (a) and (b) are already mixed, and also a single package adapted to hold (a) and (b) in separate containers, for use, e.g. by mixing in a spray tank.

A further pesticide, e.g. herbicide, insecticide or fungicide, or another plant growth regulant can be employed in sequence or admixture with the present combination of (a) and (b). Particular advantages are obtained with a further herbicide or plant growth regulant, particularly a further herbicide, e.g. the present combination applied before emergence of a crop and the further herbicide after emergence of the crop. The proportions of (a) to further pesticide or plant growth regulant, depending on the particular further pesticide or plant growth regulant, are usually from 200:1 to 1:2.

The further herbicide may be for example one or more of a phenoxyaliphatic acid, substituted urea, triazine, phenol, nitrile, bipyridylium compound, substituted benzoic acid, halogenated aliphatic acid, carbamate, thiocarbamate, chloroacetamide, diazine or arsenic herbicide.

The phenoxyaliphatic acid generally comprises alkyl and/or halogen substituted phenoxyaliphatic acids, and their salts, for example alkali metal, amine and alkanolamine salts, and functional derivatives, for example esters and amides These compounds may be of activity such that they are recognised as commercial herbicides, or may



BAD ORIGINAL

be of only slight herbicidal activity. Examples of the substituted phenoxyaliphatic acids which may be mentioned include 2,4-dichlorophenoxyacetic acid, 2-(2,4-dichlorophenoxy)propionic acid, 2-methyl-4-chlorophenoxyacetic acid, 2,4,5-trichlorophenoxyacetic acid, gamma-2,4-dichlorophenoxybutyric acid, gamma-2-methyl-4-chlorophenoxybutyric acid, alpha-2-methyl-4-chlorophenoxypropionic acid, 2-(4-[2,4-dichlorophenoxy]phenoxy)propionic acid and 2-(4-[4-chlorophenoxy]phenoxy)propionic acid.

The substituted urea generally comprises a tri- or tetra-substituted urea such as N'-(3-chloro-4-methylphenyl)-N,N-dimethylurea, N'-parachlorophenyl-N,N-dimethylurea, N'-parachlorophenyl-O,N,N-trimethylisourea, N'-p-chlorophenyl-N-methoxy-N-methylurea, N,N-dimethyl-N'-phenylurea, 3-(4-bromophenyl)-1-methoxy-1-methylurea, 1-(2-benzothiazolyl)-3-methylurea, N,N-dimethyl-N'-(4-[1-methylethyl]phenyl)urea, N'-(3,4-dichlorophenyl)-N-methoxy-N-methylurea or N,N-dimethyl-N'-[3-(trifluoromethyl)phenyl]urea.

The triazine herbicide generally comprises 2-chloro-4-(1-cyano-1-methylamino)-6-ethylamino-1,3,5-triazine or 2-isopropylamino-4-(3-methoxypropylamino)-6-methylthio-1,3,5-triazine or a compound of the formula:-

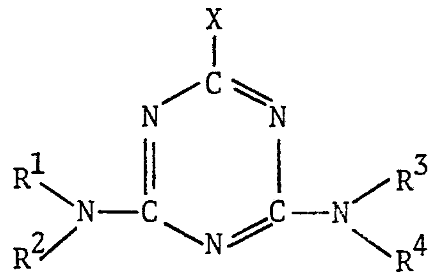

where X is a halogen atom, OY group or SY group, where Y is an alkyl group, $R^1$ and $R^3$ are the same or different and are hydrogen or alkyl and $R^2$ and $R^4$ are the same or different alkyl groups, such as 2-chloro-4,6-bisethylamino-1,3,5-triazine or 2-chloro-6-ethylamino-4-isopropylamino-1,3,5-triazine.

The phenol herbicide generally comprises 4,6-dinitro-o-cresol,4,6-dinitro-2-sec-butylphenol or pentachlorophenol. The nitrile herbicide generally comprises 3,5-diiodo-4-hydroxybenzonitrile, 3,5-dibromo-4-hydroxybenzonitrile or 2,6-dichlorobenzonitrile. The bipyridylium herbicide generally comprises 1,1'-dimethyl-4,4'-bipyridylium dichloride or 1,1'-ethylene-2-2'-bipyridylium dibromide. The substituted benzoic acid herbicide generally comprises 2,3,6-trichlorobenzoic acid, 2-methoxy-3,6-dichlorobenzoic acid or N-(1,1-dimethylpropynyl)-3,5-dichlorobenzamide. The halogenated aliphatic acid herbicide generally comprises trichloracetic acid or 2,2-dichloropropionic acid. The carbamate herbicide generally comprises isopropyl N-(3-chlorophenyl)-carbamate, 4-chloro-2-butynyl N-(3-chlorophenyl)carbamate,

methyl 3-(m-tolylcarbamoyloxy)phenylcarbamate or D-N-ethyl-2-(phenylcarbamoyloxy)propionamide. The thiocarbamate herbicide generally comprises S-ethyl N,N-dipropylthiocarbamate, S-ethyl N,N-diisobutylthiocarbamate, S-(2,3-dichloroallyl) N,N-diisopropylthiocarbamate, S-ethyl N-ethyl-N-cyclohexylthiocarbamate or S-propyl butylethylthiocarbamate. The chloroacetamide herbicide generally comprises N,N-diallyl-2-chloroacetamide or N-isopropyl-2-chloroacetanilide. The diazine herbicide generally comprises 5-bromo-6-methyl-3-sec-butyluracil, 3-cyclohexyl-5,6-trimethyleneuracil, 5-amino-4-chloro-2-phenyl-3-pyridazinone or 1,2-dihydropyridazine-3,6-dione. The arsenic herbicide generally comprises a salt of methane arsonic acid or cacodylic acid. Other herbicides which may be used as the further herbicide include 1,2-dimethyl-3,5-diphenylpyrazolium ion, ethyl N-benzoyl-N-(3,4-dichlorophenyl)alanine, N-isobutyl-2-oxo-1-imidazolidine-carboxamide, aminotriazole,2,3-dichloro-1,4-naphthoquinone, 4-amino-3,5,6-trichloropicolinic acid, N,N-dimethyl-2,2-diphenylacetamide, 2,6-dinitro-N,N-dipropyl-4-trifluoromethylaniline, N-butyl-N-ethyl-2,6-dinitro-4-trifluoromethylaniline, S,S,S-tributyl phosphorotrithioate, 2-ethoxy-2,3-dihydro-3,3-dimethyl-5-benzofuranyl methylsulphonate, 4-chloro-2-oxobenzothiazolin-3-yl acetic acid, 3-isopropyl-2,1,3-benzothiadiazinon-(4)-2,2-dioxide, 3,5-dibromo-4-hydroxybenzaldehyde 2,4-dinitrophenyloxime, methyl 2-chloro-3-(4-chlorophenyl)propionate, 2-chloroethyltrimethylammonium chloride, 4-methylsulphonyloxy-2-butynyl *m*-chlorocarbanilate, isopropyl 2-(N-benzoyl-3-chloro-4-fluoroanilino)propionate, methyl 2-(N-benzoyl-3-chloro-4-fluoroanilino)propionate, 2-chloro-N-(1,3-dioxolan-2-ylmethyl)-2',6'-dimethyl-acetanilide, 2-chloro-1-(3-ethoxy-4-nitrophenoxy)-4-trifluoromethylbenzene, methyl 2-(4-[2',4'-dichlorophenoxy]phenoxy)propionate or isobutyl 2-(4-[4'-chlorophenoxy]phenoxy)propionate.

In a preferred embodiment (b) is trietazine and neburon.

It is especially preferred that (b) is trietazine and that it is used in combination with (c) linuron. The combination of thiobencarb, trietazine and linuron is synergistic. Linuron is N-(3,4-dichlorophenyl)-N-methoxy-N-methylurea. Usually the proportions of (a) to (c) are from 200:1 to 1:2, preferably 20:1 to 3:1. Generally there is a greater weight of (a) than of (c).

Preferably (a) thiobencarb, (b) trietazine and (c) linuron are applied together in a composition such as is discussed above for (a) and (b).

Instead of applying (a) thiobencarb, (b) trietazine and (c) linuron together in a composition such as is discussed above, they can be applied in separate

applications in analogous compositions containing one or two of the essential herbicides, particularly as a chemical weed control programme, or part of a chemical weed control programme, in a crop season.

The invention includes a one pack presentation, in which (a) thiobencarb, (b) trietazine and (c) linuron are already mixed, and also a single package adapted to hold either each of (a), (b) and (c) in separate containers, or two of them in one container and the other in another container, for use, e.g. by mixing in a spray tank.

A yet further pesticide, e.g. herbicide, insecticide or fungicide, or another plant growth regulant can be employed in sequence or admixture with the present combination of (a) thiobencarb, (b) trietazine and (c) linuron. The yet further pesticide can be as discussed above for the further pesticide. Particular advantages are obtained with a yet further herbicide or plant growth regulant, particularly a yet further herbicide, e.g. the present combination applied before emergence of a crop and the yet further herbicide after emergence of the crop. The proportions of (a) to yet further pesticide or plant growth regulant, depending on the yet further pesticide or plant growth regulant, are usually from 200:1 to 1:2.

The present combination of (a) and (b) affects plant physiology so that the combination can be used as a

herbicide or plant growth regulant. Plants, the soil, land or aquatic areas can be treated by the present method. The method and composition are preferably used for selectively combating weeds at a locus where a crop is growing or is to grow. The crop is preferably ryegrass, maize or a small-grained crop such as a cereal crop (e.g. wheat, barley, oats or rye) or rice. The crop is especially wheat or barley.

The present combination of (a) and (b) is active against a wide variety of weeds. It is particularly useful against

blackgrass - Alopecurus myosuroides
wild oats - Avena spp.
meadow grass - Poa spp.
chickweed - Stellaria media and
mayweed - Matricaria spp.

In the present method, usually 0.3-26 kg, preferably 1-14 kg, *in toto* of (a) and (b) are applied per hectare. Usually 0.2-20 kg, preferably 1-8 kg, of (a) are applied per hectare. Preferably 0.5-3 kg of triallate, 1-3 kg of prometryne, 0.3-2 kg of terbutryne, 0.05-1.5 kg (e.g. 0.1-1 kg) of trietazine, 0.5-4 kg of metoxuron, 0.2-3 kg of neburon, 1-5 kg of nitrofen, or ½-4 kg of chlomethoxynil, are applied per hectare.

When (b) is trietazine, and linuron is used in

combination with it, preferably 0.05-1.5, e.g. 0.1-1, kg of linuron is applied per hectare.

The invention is illustrated by the following Examples.

Examples 1-8

Tank mixes of (a) thiobencarb and (b) the other active ingredient shown in the table below are sprayed in the field at the rates of active ingredient shown in 200 litres of water per hectare pre-emergence onto plots where wheat has been sown and onto plots where barley has been sown. In each case, good weed control is obtained.

| Example | (a) Thiobencarb rate, kg per ha | (b) | Rate of (b), kg per ha |
|---|---|---|---|
| 1 | 4 | Triallate | 1 |
| 2 | 4 | Prometryne | 2 |
| 3 | 4 | Terbutryne | 1.5 |
| 4 | 4 | Trietazine | 0.6 |
| 5 | 4 | Metoxuron | 2 |
| 6 | 4 | Neburon | 2 |
| 7 | 4 | Nitrofen | 1.5 |
| 8 | 4 | Chlomethoxynil | 1.5 |

Example 9

Tank mixes in water of (a) thiobencarb and (b) trietazine were sprayed at the rate of 4 kg of thiobencarb per hectare and 0.6 kg of trietazine per hectare per-emergence

in the field onto plots in which barley had been sown. The herbicidal effect was assessed compared to controls on the barley and weeds on a scale on which 0 represents no effect and 100 total kill. The results are shown below.

| Plant Species | % Herbicidal Effect |
|---|---|
| Barley - *Hordeum vulgare* | 11 |
| Pale Persicaria - *Polygonum lapathifolium* | 58 |
| Wild Oats - *Avena* spp. | 46 |
| Charlock - *Sinapis arvensis* | 57 |
| Chickweed - *Stellaria media* | 78 |
| Fathen - *Chenopodium album* | 84 |

The good weed control with safety to the barley is apparent.

Examples 10-15

To test the results from combinations of herbicides against those from the individual herbicides, tank mixes of (a) thiobencarb and (b)trietazine were sprayed in the greenhouse at the rates of active ingredient specified in the table below pre-emergent onto pots of soil in which the specified crop and weed species had been sown. The herbicidal effect was assessed 4 weeks after application to the mayweed and chickweed and 6 weeks after application to the wheat and barley, on a scale on which 0 represents

no effect and 100 total kill. The table below shows the results obtained and also those expected for the combination from the Colby formula.

| Thiobencarb, kg per ha | + Trietazine, kg per ha | Wheat | % Herbicidal Effect Barley | Mayweed | Chickweed | |
|---|---|---|---|---|---|---|
| 1 | 0 | 6 | - | 0 | 0 | |
| 0 | 0.15 | 0 | - | 45 | 68 | |
| 1 | 0.15 | 3 | - | 50 | 75 | Actual |
| | | 6 | - | 45 | 68 | Expected |
| 2 | 0 | 18 | 5 | - | - | |
| 0 | 0.3 | 0 | 8 | - | - | |
| 2 | 0.3 | 5 | 8 | - | - | Actual |
| | | 18 | 12 | - | - | Expected |

It can be seen that the effect of the combination of herbicides on the crops is less than expected (i.e. the combination is unexpectedly safer to the crops), and that the effect of the combination of herbicides on the weeds is greater than expected (i.e. the combination is unexpectedly more active against weeds). The combination is synergistic.

Examples 16-18

Tank mixes in water of (a) thiobencarb, (b) trietazine and (c) linuron were sprayed in the greenhouse at the rates of active ingredient specified in the table below pre-emergent onto pots of soil in which the specified crop and weed species had been sown. On assessment of the herbicidal effect, 4 weeks after application to the broad-leaved weeds and 6 weeks after application to the grass weeds and cereal crops, the following figures were obtained, on a scale on which 0 represents no effect and 100 total kill.

| (a)+(b)+(c), kg per ha | Wheat | Barley | Black-grass | Wild Oat | Cleaver | Speedwell | Mayweed | Chickweed |
|---|---|---|---|---|---|---|---|---|
| 1+0.075+0.075 | 8 | 0 | 100 | 28 | 5 | 100 | 40 | 96 |
| 2+0.15+0.15 | 12 | 10 | 100 | 58 | 25 | 100 | 98 | 100 |
| 4+0.3+0.3 | - | 15 | 100 | 90 | 85 | 100 | 100 | 100 |

Blackgrass is *Alopecurus myosuroides*

Cleaver is *Galium aparine*

Speedwell is *Veronica persica*

The good weed control with safety to the wheat or barley is apparent, especially at the 2 higher rates.

<u>Examples 19-22</u>

To test the results from combinations of herbicides against those from the individual herbicides, analogous tests to those of Examples 16-18 were carried out on wheat and mayweed at the rates of active ingredient shown in the table below. The table also shows the results obtained and those expected for the combination from the Colby formula.

| (a) Thiobencarb + | (b) Trietazine + | (c) Linuron, kg per ha | Wheat | | Mayweed |
|---|---|---|---|---|---|
| 2 | 0 | 0 | 18 | | 0 |
| 0 | 0.15 | 0 | 0 | | 45 |
| 0 | 0 | 0.15 | 0 | | 10 |
| 2 | 0.15 | 0.15 | 12 | Actual | 98 |
| | | | 18 | Expected | 51 |

It can be seen that the combination of herbicides is markedly safer to wheat than expected and markedly more effective against mayweed than expected. The combination is synergistic.

CLAIMS

1. A method of combating weeds or regulating the growth of a plant at a locus, which method comprises applying to the locus a weed-combating or plant growth regulant amount of

(a) thiobencarb; and

(b) one or more of trietazine, prometryne, terbutryne, triallate, metoxuron, neburon, nitrofen and chlomethoxynil.

2. A method of combating weeds or regulating the growth of a plant at a locus, which method comprises applying to the locus a weed-combating or plant growth regulant amount of

(a) thiobencarb; and

(b) trietazine.

3. A method according to claim 1 or 2 wherein the weight proportions of (a) to (b) are from 25:1 to 1:6.

4. A method according to any one of the preceding claims wherein (a) and (b) are applied together.

5. A method according to claim 2 wherein there is applied also

(c) linuron.

6. A method according to claim 5 where the weight proportions of (a) to (c) are from 20:1 to 3:1.

7. A method according to claim 5 or 6 wherein (a), (b) and (c) are applied together.

8. A method according to any one of the preceding claims wherein the application is to a locus at which a crop is growing or is to grow, to selectively combat weeds therein.

9. A method according to claim 8 wherein the crop is ryegrass or a cereal crop.

10. A plant physiologically active composition comprising
(a) thiobencarb; and
(b) one or more of trietazine, prometryne, terbutryne, triallate, metoxuron, neburon, nitrofen and chlomethoxynil.

11. A plant physiologically active composition comprising
(a) thiobencarb; and
(b) trietazine.

12. A composition according to claim 10 or 11 wherein the weight proportions of (a) to (b) are from 25:1 to 1:6.

13. A composition according to claim 11 which also contains linuron.

14. A composition according to claim 13 wherein the weight proportions of (a) to (c) are from 20:1 to 3:1.

0024841

European Patent Office

# EUROPEAN SEARCH REPORT

Application number EP 80 30 2741

## DOCUMENTS CONSIDERED TO BE RELEVANT

| Category | Citation of document with indication, where appropriate, of relevant passages | Relevant to claim |
|---|---|---|
| X | CHEMICAL ABSTRACTS, vol. 90, no. 3, 15th January 1979, page 186, right-hand column, no. 17675e Columbus, Ohio, U.S.A.<br>& JP - A - 78 47530 (ASAHI CHEMICAL INDUSTRY CO., LTD.) 28-04-1978<br>* Abstract *<br>-- | 1,3,4, 8,9,10 |
| X | CHEMICAL ABSTRACTS, vol. 87, no. 3, 18th July 1977, page 148, left-hand column, no. 17095d Columbus, Ohio, U.S.A. W.L. CHANG et al.: "Chemical weed control in transplanted winter rice in Saudi Arabia"<br>& CHUNG-HUA NUNG YEH YEN CHIU 1976, 25(3), 242-7<br>* Abstract *<br>-- | 1,3,4, 8,9,10 |
| X | CHEMICAL ABSTRACTS, vol. 83, no. 17, 27th October 1975, page 143, right-hand column, no. 143010c Columbus, Ohio, U.S.A.<br>& JP - A - 75 49429 (KUMIAI CHEMICAL INDUSTRY CO., LTD.) 02-05-1975<br>* Abstract *<br>-- | 1,3,4, 8,9,10 |
| | BE - A - 726 265 (KUMIAI)<br>* Page 3, lines 31-33; page 4, lines 1-3; claims *<br>-- | 1-4,8-11 |
| A | FR - A - 2 016 521 (KUMIAI)<br>* Claims *<br>-- ./. | 1-4,8-11 |

**CLASSIFICATION OF THE APPLICATION (Int. Cl.3)**

A 01 N 47/12
47/30
A 01 N 47/12//
(A 01 N 47/12
47/30
43/70
33/22)
A 01 N 47/30//
(A 01 N 47/30
47/12)

**TECHNICAL FIELDS SEARCHED (Int. Cl.3)**

A 01 N 47/12
47/30
43/70
33/22

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-11-1980 | MERGONI |

European Patent Office

# EUROPEAN SEARCH REPORT

0024841

Application number

EP 80 30 2721



## DOCUMENTS CONSIDERED TO BE RELEVANT

| Category | Citation of document with indication, where appropriate, of relevant passages | Relevant to claim |
|---|---|---|
| A | FR - A - 2 239 939 (BAYER)<br>* Claim 1 *<br>-- | 1-4,8-11 |
| | DE - A - 2 135 768 (KUMIAI)<br>* Claims *<br>-- | 5-7,13,14 |
| A | FR - A - 2 039 427 (KUMIAI)<br>* Claims *<br>-- | 1-4,8-11 |
| A | DE - A - 2 150 956 (HOECHST)<br>* Page 5, lines 19,21; page 6, lines 1,32 *<br>---- | |

CLASSIFICATION OF THE APPLICATION (Int. Cl. 3)

TECHNICAL FIELDS SEARCHED (Int. Cl. 3)